Europäisches Patentamt

European Patent Office

Office européen des brevets

(11) Publication number: **0 541 174 A1**

## EUROPEAN PATENT APPLICATION

(21) Application number: 92203380.8

(22) Date of filing: 02.11.92

(51) Int. Cl.⁵: **C08L 53/02**, C08L 101/00, C08K 5/01, //(C08L53/02, 101:00),(C08L101/00,53:02)

(30) Priority: **04.11.91 EP 91202860**

(43) Date of publication of application:
**12.05.93 Bulletin 93/19**

(84) Designated Contracting States:
**BE DE ES FR GB IT NL SE**

(71) Applicant: **SHELL INTERNATIONALE RESEARCH MAATSCHAPPIJ B.V.**
**Carel van Bylandtlaan 30**
**NL−2596 HR Den Haag(NL)**

(72) Inventor: **Vermeire, Hans Ferdinand**
**Avenue Jean Monnet 1**
**B−1348 Ottignies Louvain−La−Neuve(BE)**
Inventor: **Dendooven, Hans Roger Henri**
**Avenue Jean Monnet 1**
**B−1348 Ottignies Louvain−La−Neuve(BE)**

(54) **Low molecular weight poly(alkylene) and hydrogenated poly(vinyl aromatic/conjugated diene) block copolymer containing compositions and their novel applications.**

(57) A block copolymer composition is provided comprising:

(a) a block copolymer containing at least one block, derived from predominantly vinyl aromatic compound and at least one selectively hydrogenated elastomeric block, derived from predominantly conjugated diene,

(b) thermoplastic polymers selected from polyalkylenes, poly(vinyl aromatic), polyphenylene ether and mixtures thereof in an amount of from 5 parts by weight to 500 parts by weight per 100 parts by weight of block copolymer,

(c) a plastifier consisting of a poly(alkylene) having a $\overline{M}_w/\overline{M}_n$ ratio in the range of from 1.0 to 3.0, preferably of from 1.3 to 2.4, and having a number average molecular weight in the range of from 1100 to 6000 and preferably in the range of from 1200 to 4500 and more preferably from 2000 to 3500 in an amount of from 5 to 200 parts by weight per 100 parts by weight of block copolymer,

(d) fillers in an amount of from 0 to 500 parts by weight preferably 50 to 250 per 100 parts by weight of block copolymer, and

(e) additives such as flame retarders, antioxidantia, stabilizers, flow promoting resins, dyes and the like, each of the additives in an amount of from 0 to 50 parts by weight per 100 parts by weight of block copolymer.

The block copolymer composition shows properties, which are in particular not influenced by heat ageing, and is therefore very useful for the more sophisticated applications, e.g. in the medical area.

Rank Xerox (UK) Business Services
(3.10/3.6/3.3.1)

EP 0 541 174 A1

The invention is relating to low molecular weight poly(alkylene) and hydrogenated poly(vinyl aromatic/conjugated diene) block copolymer containing compositions and their novel applications.

The use of low molecular weight poly(alkylene) in combination with hydrogenated poly(vinyl aromatic/conjugated diene) block copolymers and more in particular the use of low molecular weight poly − (alkylene) in combination with poly(styrene/butadiene) or poly(styrene/isoprene) block copolymers, the elastomeric blocks of which have been selectively hydrogenated, was known for applications of said compositions as insulating filling gels, adhesives and sealants.

Such applications were known from e.g. US patents Nos. 4,138,378; 4,176,240; 4,361,663; 4,369,284; 4,617,422; 4,618,213; 4,716,183; 4,762,878; and 4,942,270 and Japanese patent applications Nos. 63213586 and 0106549.

More in particular from US patent No. 4,138,378 sealant compositions were known, which comprised hydrogenated thermoplastic elastomer, a low molecular weight polyalkylene plasticizer, a modifying resin selected from the group consisting of modified and unmodified rosin and rosin esters, esters of polymerized rosin, polyterpene resins, terpene−phenolic resins, coumarone−indene resins, diolefin−olefin resins, phenol−aldehyde resins and aromatic resins, said resin being present in an amount within the range of 10 to 300 parts by weight per 100 parts by weight of hydrogenated thermoplastic elastomer, and a filler selected from calcium carbonate, aluminium silicate, clay, talc, kaolin and silica, in an amount within the range of 25 to 250 parts per 100 parts by weight of said hydrogenated thermoplastic elastomer.

The plasticizer was indicated to be present preferably in an amount of 25 to 175 parts by weight per 100 parts by weight of said hydrogenated thermoplastic elastomer, and is preferably selected from homopolymers of ethylene, propylene, 1−butene, cis−2−butene, trans−2−butene, isobutylene, pentenes etc. as well as copolymers and terpolymers thereof in all proportions and mixtures thereof, said polymers possessing weight average molecular weights from 200 to about 3000 and preferably from 300 to 2000.

The US patent No. 4,176,240 disclosed a filling material, having improved handling characteristics and useful for waterproofing electrical cables and comprising a styrene−ethylene−butylene−styrene block copolymer dissolved in (white) mineral oil and polyethylene, the latter being added for consistency.

From the graph, representing compositions having suitable relative proportions of the three compo − nents, a relatively high oil content and a relatively low block copolymer content could be derived.

From US patent No. 4,361,663 it was known to use about 25 to 200 parts by weight of a polybutene or polyisobutylene per 100 parts of hydrogenated block copolymer in pressure sensitive adhesive composi − tions which comprise in addition about 25 to about 250 parts by weight of a hydrocarbon resin of a petroleum or coal tar distillate, aliphatic diene and mono − and diolefins, cyclic olefins of 5 or 6 carbon atoms and hydrogenated polycyclics per 100 parts of hydrogenated block copolymers.

US patent No. 4,617,422 disclosed a fully−filled telecommunication cable comprising a plurality of metallic conductors each coated with cellular insulation and a sheath enclosing said conductors and containing a filling medium comprising (by weight):

(a) 70−98% of a hydrocarbon base comprising:

(i) a first component which is selected from the group consisting of mineral oils, petroleum jellies and mixtures of mineral oil with wax;

(ii) a second component which is soluble in the first component and which comprises at least one hydrocarbon whose molecules are substantially incapable of diffusing into polyethylene, poly − propylene and other cellular insulating material at temperatures of up to 80 ˚C, its number average molecular weight being low enough and its quantity sufficient to establish an osmotic pressure relative to that of the first component as solvent, which is effective to inhibit migration of said first component into cells of said cellular insulation;

(b) 1−15% of a block copolymer which comprises a main polymer chain made up of repeating units of at least two kinds covalently bonded together, said repeating units being non−randomly distributed along the length of said chain in such a way as to divide said chain into at least one block tending to confer solubility in the base and at least one block tending to inhibit such solubility, the proportions of the blocks being such that the polymer forms a gel with the base; and

(c) 1−15% of a hydrocarbon material that is miscible with said base and said block copolymer above 135 ˚C but forms solid dispersed particles at a temperature not lower than 65 ˚C.

Preferably as said second component of the base is used a liquid polybutene with a number average molecular weight between 200 and 4000 or a low molecular hydrocarbon resin. However, in column 3 of this patent, lines 24−28, there was taught that as the molecular weight of the polybutylene increases as compared with the specified range, the solubility and gel forming ability of the block copolymer is impaired and the resulting composition tends to become more tacky.

US patent No. 4,618,213 disclosed gelatinous elastomer compositions consisting essentially of:

2

(a) 100 parts by weight of triblock copolymer of the general configuration poly(styrene – ethylene – butylene – styrene) wherein said styrene end block to ethylene and butylene centre block ratio is within the range of from between 31:69 to 40:60;

(b) from about 300 to about 1600 parts by weight of a plasticizing oil; and

(c) said gelatinous elastomer composition having a gel rigidity of about 20 gram to about 700 gram Bloom.

Preferably the plasticizing oil was selected from the group consisting of petroleum paraffinic oils, petroleum naphthenic oils, and mixture thereof.

More preferably said plasticizing oil was selected from the group consisting of petroleum paraffinic oils, petroleum naphthenic oils, synthetic polybutene oils, synthetic polypropylene oils, synthetic polyterpene oils and mixtures thereof; said oils having an average molecular weight of between about 200 to about 700.

It was found that such plasticizing oils, applied in the indicated amounts led to bleeding out of unacceptable amounts of such plasticizing oils in compositions containing more triblock copolymer.

US patent No. 4,716,183 disclosed adhesive compositions comprising:

about 2 to about 30 parts by weight of a mixture of poly(styrene – ethylene – butylene – styrene) triblock copolymers; and

about 70 to about 98 parts by weight of a hydrocarbon oil; and wherein the mixture of triblock copolymers comprises:

(a) a triblock copolymer having a styrene to ethylene – butylene ratio of 14 to 30 styrene blocks to 70 to 86 ethylene – butylene blocks; and

(b) a triblock copolymer having a styrene to ethylene – butylene ratio of 31 to 35 styrene blocks to 65 to 69 ethylene – butylene blocks; and

wherein the ratio of copolymer (a) to copolymer (b) is from about 15:85 to about 85:15, to be used for the preparation of cross – linked compositions by means of electron beam radiation or with U.V. radiation. The oil could be a hydrocarbon oil such as paraffinic or naphthenic oils, synthetic oils such as polybutene or polypropylene oils or mixtures.

The preferred oils should be mixtures of non – aromatic paraffinic/naphthenic hydrocarbon oils.

From US patent No. 4,942,270 compositions were known, which comprised 2 – 30% by weight of a hydrogenated poly(styrene – butadiene – styrene) triblock copolymer and 70 – 98% by weight of plasticizer to be used as cable sealing compositions.

In said triblock copolymer, having a total molecular weight of at least 100,000, the polystyrene block – poly(ethylene – butylene) block weight ratio was in the range of from 27 – 35 to 65 – 73.

The oils useful for said composition had a molecular weight in the range of about 400 to about 2500 and most preferably from about 450 to about 1500, and a solubility parameter in the range of about 6.0 to about 8.5 and preferably in the range from 6.5 to 7.8.

Preferred oils included paraffinic and/or naphthenic oils, synthetic polyalpha – olefin oils, polypropylene oils and polybutene oils.

As general teaching was mentioned that the solubility parameter of the oil will decrease with an increase in molecular weight and in case of paraffinic/naphthenic oils, the solubility parameter decreases for increasing paraffin content.

From the Japanese patent application No. 63213586 A adhesive compositions for bonding poly – propylene were known, which were comprising:

(A) a hydrogenated styrene/isoprene/styrene block copolymer or styrene/butadiene/styrene block copolymer;

(B) a tackifier resin; and

(C) a plasticizer of wax, low molecular weight alpha – olefin oligomer or liquid hydrocarbon.

Component (C) is preferably i.a. low molecular weight polyethylene, low molecular weight polypropylene and the like.

From the Japanese patent application No. 01065149 A thermoplastic elastomer compositions for sealing material in water cisterns were known, which were comprising:

(A) olefinic thermoplastic elastomer;

(B) styrene thermoplastic elastomer, e.g. styrene – ethylene – butylene – styrene block copolymer in an amount of from 40 to 110 parts by weight per 100 parts by weight (A); and

(C) a plasticizer preferably being low molecular weight isobutylene in an amount of from 5 to 60 parts by weight per 100 parts by weight of (A).

Component A was partially cross – linked and had a low compression set.

The composition did not exhibit excretion or migration of plasticizers.

EP 0 541 174 A1

From British patent No. 1,467,463 it was known for a rather long time to avoid or to diminish the bleeding out of extending oils from hydrogenated block copolymer containing compositions, following exposure to actinic radiation by using compositions comprising:

(a) 100 parts by weight of hydrogenated block copolymers containing at least one poly(aromatic monoalkenyl) block and at least one poly(conjugated diene) block or a copolymer block of ethylene with propylene,

(b) 15 – 200 parts by weight of normally solid polypropylene,

(c) 20 – 150 parts by weight of an extending hydrocarbon oil, and

(d) 5 – 75 parts by weight of a petroleum hydrocarbon wax having an average molecular weight in the range of from 280 to 850.

From the British patent specification No. 1,560,896 it was known for a rather long time to prevent or minimize extender oil bleed – out from oil – extended compositions comprising a selectively hydrogenated block copolymer and a polyolefin by using sterically hindered phenols and benzotriazoles in an amount of from 0.2 to 5 parts by weight per 100 parts by weight of the selectively hydrogenated block copolymer.

From Shell Technical Bulletin No. SC 65 – 75 were known blends comprising poly(styrene – ethylene – butylene – styrene) triblock copolymers having polystyrene end blocks to ethylene – butylene centre block, butyl rubber, tackifier, filler and oil as plasticizer. The compositions obtained were indicated to show decreases in the desired properties such as poor elongation and tensile strength, poor creep, craze, tear and crack resistance. Said compositions were mentioned moreover to tend to rupture and to crumble when submitted to moderate shearing stress.

It will be appreciated that said prior art compositions as described hereinbefore could certainly not be used for the more sophisticated applications of hydrogenated block copolymers, e.g. in elastic films and particularly in KRATON G (KRATON is a Trade Mark) grades, in the medical area, in enrobing wires and cables and in flooring, roofing, automotives and in sporting goods, such as grips for golfclubs, rackets and fishing rods, for which the most severe requirements have to be met.

This was found to be mainly caused by undesirable side effects such as migration, bleeding out of the currently used oils during long term use at or after exposure to heat and/or light and too much reduction of physical properties, such as tensile strength, compression set and hardness. Moreover, excretion of any small plasticizer oil amount may be unacceptable for special applications, especially in the medical area.

It was an object of the present invention to provide hydrogenated block copolymer containing compositions which can meet modern high quality standards over a long operation period and at high operation temperatures and/or at light exposure.

More particularly an object of the present invention is to improve further several properties of hydrogenated block copolymer, plasticizer and engineering thermoplastic containing compositions, such as tensile strength retention and flow rate in combination with acceptable colour stability and low volatility during ageing, for applications of said hydrogenated block copolymers aimed at.

As a result of research and experimentation block copolymer containing compositions were surprisingly found, which comprise:

(a) a block copolymer containing at least one block, derived from predominantly vinyl aromatic compound and at least one selectively hydrogenated elastomeric block, derived from predominantly conjugated diene,

(b) thermoplastic polymers selected from polyalkylenes, poly(vinyl aromatic), polyphenylene ether and mixtures thereof in an amount of from 5 parts by weight to 500 parts by weight, preferably 25 to 250, per 100 parts by weight of block copolymer,

(c) a plastifier consisting of a poly(alkylene) having a $\overline{M}_w/\overline{M}_n$ ratio in the range of from 1.0 to 3.0, preferably of from 1.3 to 2.4, and having a number average molecular weight in the range of from 1100 to 6000 and preferably in the range of from 1200 to 4500 and more preferably from 2000 to 3500 in an amount of from 5 to 200 parts by weight and preferably of from 50 to 150 parts by weight per 100 parts by weight of block copolymer,

(d) fillers in an amount of from 0 to 500 parts by weight, preferably 50 to 250, per 100 parts by weight of block copolymer, and

(e) additives such as flame retarders, antioxidantia, stabilizers, flow promoting resins, dyes and the like, each of the additives in an amount of from 0 to 50 parts by weight per 100 parts by weight of block copolymer.

The block copolymers to be used as component (a) are preferably linear or star shaped block copolymers, which have been derived from a living block copolymer, having at least one block derived from predominantly a vinyl aromatic compound and preferably styrene and at least one block derived from predominantly conjugated diene, and obtained by means of anionic polymerization, optionally by coupling

4

with a suitable polyfunctional coupling agent and subsequent selective hydrogenation of the poly(conjugated diene) blocks, and bearing terminal poly(vinyl aromatic) blocks in a sufficient degree in order to provide characteristic thermoplastic elastomer properties.

It will be appreciated that as component (a) also mixtures of triblock or star shaped block copolymers and the terminated preceding starting diblock copolymer can be used or diblock copolymers alone.

It will be appreciated that with the term "predominantly" is meant, that in the poly(vinyl aromatic) blocks minor amounts of conjugated diene may be included in random or tapered blocks and that in the poly − (conjugated diene) blocks minor amounts of styrene may be included in random or tapered blocks.

More preferred block copolymers have the structure SBS, SIS, $(SB)_nX$ or $(SI)_nX$ wherein S represents a block derived from styrene, $\alpha$ − methylstyrene, 4 − n − propylstyrene, 3 − methylstyrene, 1 − vinylnaphthalene, 2 − vinylnaphthalene and the like, of which styrene being preferred, and B represents a block derived from 1,3 − butadiene; isoprene; 2,4 − hexadiene; 3 − ethyl − 1,3 − pentadiene and the like, of which 1,3 − butadiene and isoprene are preferred.

It is preferred that the polymer blocks B have an apparent molecular weight of from 25,000 to 200,000 and the poly(styrene) block − poly(ethylene − butylene) block weight ratio is in the range of from 27 − 35 to 65 − 73. More preferably the copolymer blocks A have apparent molecular weights from 7500 to 50,000, while the polymer blocks B have apparent molecular weights from 30,000 to 150,000.

It will be appreciated that with the term "apparent molecular weight" as used throughout the specifica − tion is meant the molecular weight as determined by gel permeation chromatography using polystyrene standards.

Most preferably block polymer grades identified as KRATON G − 1650, KRATON G − 165X (KRATON − RP − 6904), KRATON G − 1651 and KRATON G − 1652 or combinations thereof are used.

As thermoplastic engineering polymers to be used as component (b) are mentioned polyalkylenes, poly(vinyl aromatic), polyphenylene ethers or combinations thereof.

Preferably commercial polyethylene or polypropylene grades having a weight average molecular weight exceeding 6,000 are used and more preferably polypropylene in isotactic or stereo regular form will be used.

The nominal melt flow of the polypropylene prior to admixture of block copolymer may range from 0.2 to 20, preferably from 0.5 to 12 dg/minute as determined by ASTM method D 1238 at 230 ˚C and 2.16 kg load.

The density may range from 0.902 to 0.910 g/cc at 22.8 ˚C, while the flex modulus may range from 8780 to 17,580 $g/cm^2$.

The preferred poly(vinyl aromatic) is polystyrene.

The polyalkylene plastifier to be used as component (c) in the present compositions preferably consists of commercially available liquids obtained by polymerization to a low degree of a gaseous feedstock consisting essentially of propylene, butylene or isobutylene or mixtures thereof and preferably isobutylene or butylene.

The notations "$\overline{M}_w$" and "$\overline{M}_n$" are generally used for respectively the weight average molecular weight and the number average molecular weight.

Suitable liquid polybutylenes are sold, e.g. by BP Chemicals Limited, under the trade names "Hyvis" and "Napvis". Particular examples of suitable polyalkylenes are Hyvis 200 and Napvis 30 by BP (Hyvis and Napvis are Trade Marks).

A preferred group of flow promoting resins, embraced by component (c) of the composition, if any, consists of low molecular weight hydrocarbon resins, particularly those, said to be derived largely from alpha − methylstyrene, sold by Hercules Powder Company under the trade name Kristalex (Kristalex is a Trade Mark) and having ring and ball softening points (ASTM − E28) between 20 and 140 ˚C and more particularly between 60 and 120 ˚C.

As further additives can be added to the present composition e.g. antioxidant, e.g. Irganox (Irganox is a Trade Mark) and/or stabilizers against UV light and actinic light (e.g. Tinuvin (Tinuvin is a Trade Mark)), usually in amounts less than 2 parts by weight per hundred parts by weight of block copolymer, whereas as other additives can be used dyes, flame retarders and the like, in amounts of from 0 to 50 phr for each additive.

It will be appreciated by a person skilled in the art with reference to the hereinbefore discussed prior art, that the attractive physical properties of the present compositions over a long term and under extraordinary conditions, could certainly not be expected.

An important advantage of the present compositions is the enablement of the novel applications of hydrogenated block copolymers, which seemed impossible or hardly acceptable up to now, such as elastic film, medical, wire and cable enrobing, automotive, flooring and roofing applications, and application in sporting goods, such as grips for golfclubs, tennis rackets and fishing rods.

The compositions of the present invention can be prepared by a process, comprising the following steps:

(a) a master batch obtained by preblending the components (a), (b), (d) and (e) in their complete specified amounts was melt − blended with a poly(alkylene) plastifier in an internal mixer, which was performing high shear. The obtained polymer blend was formed into a sheet on a rolling mill, followed by chopping and granulating. This granulate could be used for e.g. injection or compression moulding or extrusion of desired shaped articles,

(b) injection of the plasticizer at increased temperature into an extruder wherein the other components (a), (b), (d) and (e) have already been premixed.

Another aspect of the present invention is formed by the use of the hereinbefore specified compositions and by shaped articles obtained from these compositions.

The invention will be illustrated by the following examples without restricting the scope to these specific embodiments.

EXAMPLE 1

A preblend of 100 parts by weight of KRATON G − 1650, 50 parts by weight of polypropylene (PP SM 6100), 20 parts by weight of flow promoting resin (Kristalex F 120), 0.2 parts by weight of antioxidant (Irganox 1010) and 0.5 parts by weight of DLTDP (Irganox PS 800) was prepared using a Papenmeier mixer for 20 minutes at room temperature and the obtained mass was subsequently mixed in a Berstorff (Berstorff is a Trade Mark) 25 mm co − rotating twin screw extruder, having a screw speed of 280 rpm. The extrudate was cooled in a water bath and granulated through a Reeves (Reeves is a Trade Mark) granulator.

To the obtained granulate 75 parts by weight of plasticizer (Hyvis 200) were added during melt − blending in a Pomini Farrell PL 4.3 (Pomini Farrell is a Trade Mark) internal mixer.

An overload volume of 10 percent was used to create a floating ram mixing condition. The rotor speed was 150 rpm. The obtained mass was dumped onto the warm (80 ˚C) rolls of a Schwantentan 300 L (Schwantentan is a Trade Mark) mill for cooling and subsequent sheeting off at a thickness of 1.5 mm.

The sheet was cooled to room temperature and subsequently granulated through a Sagitta dicer (Sagitta is a Trade Mark). The obtained composition was injection moulded into 150 x 150 x 2 mm test plates using a Demag D 150 injection moulder.

The mould cavity was fan − gated over one side to give a well defined flow pattern during moulding.

It allowed physical properties to be measured parallel (Moulding Direction MD) and perpendicular to melt flow direction (Perpendicular Moulding Direction PMD) to assess the degree of anisotropy in injection moulded specimen.

The injection moulded plates were then conditioned for at least 16 hours in standard atmosphere, T: 23 ˚C, humidity: 50%, before testing.

EXAMPLES 2 − 9 and Comparative Examples

In the same way as described under Example 1, compositions were prepared starting from the components, as specified in Table A. Witco 260 (Witco is a Trade Mark) was used as the oil plasticizer in Comparative Formulations (A), (B) and (C).

TABLE A    Composition (in pbw) of Formulations (1)-(9) and Comparative Formulations (A)-(C)

| Formulation | (1) | (2) | (3) | (A) | (4) | (5) | (6) | (B) | (7) | (8) | (9) | (C) |
|---|---|---|---|---|---|---|---|---|---|---|---|---|
| KRATON G-1650 | 100 | 100 | 100 | 100 | | | | | | | | |
| KRATON G-1651 | | | | | 100 | 100 | 100 | 100 | | | | |
| KRATON G-1652 | | | | | | | | | 100 | 100 | 100 | 100 |
| Hyvis 200 | 75 | 100 | 125 | | 75 | 100 | | | 75 | 100 | | |
| Napvis 30 | | | | | | | 100 | | | | 100 | |
| Witco 260 oil | | | | 100 | | | | 100 | | | | 100 |
| PP SM 6100 | 50 | 50 | 50 | 50 | 50 | 50 | 50 | 50 | 50 | 50 | 50 | 50 |
| Kristalex F 120 | 20 | 20 | 20 | 20 | 20 | 20 | 20 | 20 | 20 | 20 | 20 | 20 |
| Irganox 1010 | 0.2 | 0.2 | 0.2 | 0.2 | 0.2 | 0.2 | 0.2 | 0.2 | 0.2 | 0.2 | 0.2 | 0.2 |
| Irganox PS 800 | 0.5 | 0.5 | 0.5 | 0.5 | 0.5 | 0.5 | 0.5 | 0.5 | 0.5 | 0.5 | 0.5 | 0.5 |

Type (C) dumbbells, according to ASTM D412, were cut from the conditioned injection moulded plates. These plates were used to measure the stress/strain properties: moduli, tensile strength, elongation at break, tensile set and set at break. The distance between the bench markers on the dumbbells was 25 mm. Crosshead speed of the Zwick Mechanical Tester was 500 mm/min, except for measuring tensile set for which the crosshead speed is set according to ASTM D412. The results are given in Table B.

Angle tear test pieces without nick, according to ISO 34 – 79, were cut from the plates. These test pieces were used to measure unnicked angle tear strength. Crosshead speed of the Mechanical Tester was 500 mm/min. The results are shown in Table B.

The indentation Shore A hardness was measured according to ASTM D2240 with a Durometer on a stack of three 2 mm thick samples after 0 s (initial indentation) and after 30 s. The results are given in Table B.

The Melt Flow Rate (MFR), according to ASTM D1238, covers measurement of the rate of extrusion of molten polymers or compounds through a well specified die under well prescribed conditions of tempera – ture and load.

A Davenport extrusion plastometer was used to evaluate the compounds under condition "G" (200 ˚C/5 kg) and/or "E" (190 ˚C/2.16 kg). The results are given in Table B.

4.46 mm diameter samples, cut from injection moulded test plates from formulations (1), (6), (7), (9), (A) and (B), were placed in a circulating air oven at a constant temperature of 120 ˚C for a period of 12 weeks. After 2 and 12 weeks, the change in weight of the samples was measured, while after 2, 4, 6 and 12 weeks the percentage shrinkage of the samples was measured.

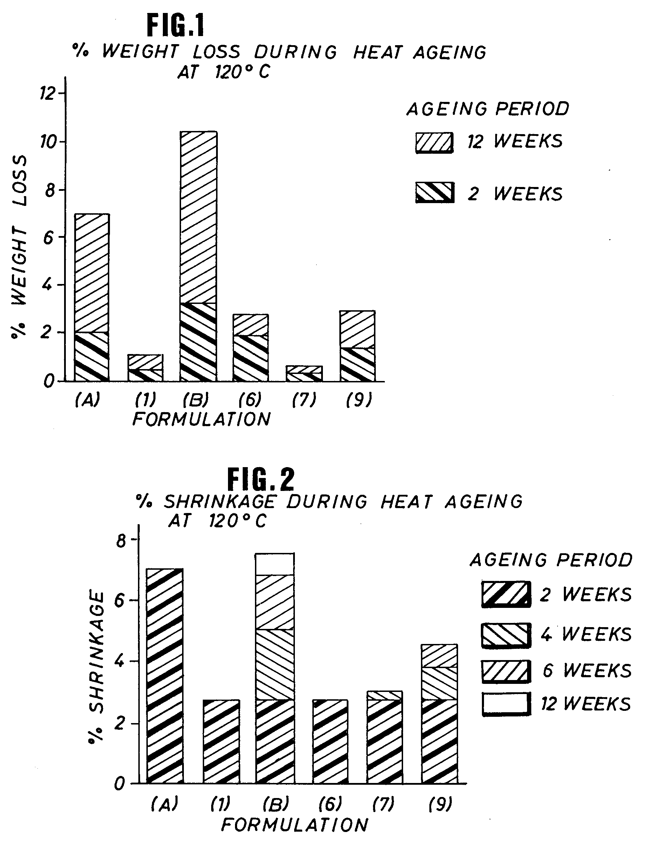

The results in Figure 1 show the change in weight and the the results in Figure 2 show the change of linear shrinkage of the circular test pieces during hot air ageing.

It will be appreciated from figures 1 and 2 that the formulations according to the invention show significant less weight loss and shrinkage when subjected to heat ageing than the formulations containing oil as the plasticizer.

This is caused by the fact that the bleeding out of polyalkylenes is far less than the bleeding out of oil.

Injection moulded plates from the selected formulations were also aged under conditions as described above. Every four weeks, type (C) dumbbells and angle tear test pieces as mentioned above, were cut from these plates, and used to measure physical properties. Hardness Shore A was measured according to ASTM D2240 on a stack of three 2 mm thick injection moulded samples after 0 s (initial indentation) and after 30 s. The results are shown in Tables C and D.

TABLE B   Physical properties of Formulations (1)-(9) and Comparative Formulations (A)-(C)

| Formulation | (1) | (2) | (3) | (A) | (4) | (5) | (6) | (B) | (7) | (8) | (9) | (C) |
|---|---|---|---|---|---|---|---|---|---|---|---|---|
| Hardness Shore A | | | | | | | | | | | | |
| 0 (s) | 81 | 78 | 72 | 72 | 81 | 77 | 76 | 74 | 81 | 73 | 71 | 72 |
| 30 (s) | 78 | 73 | 65 | 69 | 77 | 73 | 73 | 71 | 78 | 68 | 68 | 69 |
| MFR "G" (g/10 min) | 13 | 65 | >100 | >100 | 17 | 70 | 30 | 15 | - | - | - | - |
| MFR "E" (g/10 min) | 0.8 | 5 | 11 | 10 | 0.3 | 4.6 | 0.7 | 0.08 | 10.6 | 35.4 | 26.7 | - |
| MD | | | | | | | | | | | | |
| Tensile strength (MPa) | 10.6 | 5.0 | 3.9 | 8.8 | 8.6 | 6.6 | 9.4 | 7.9 | 10.9 | 7.8 | 9.0 | 4.8 |
| Modulus 100% (MPa) | 3.9 | 3.2 | 2.8 | 3.7 | 3.6 | 3.3 | 3.2 | 2.7 | 5.6 | 3.7 | 4.1 | 3.8 |
| Modulus 300% (MPa) | 5.7 | 4.3 | 3.6 | 4.9 | 5.6 | 4.8 | 4.9 | 4.1 | 7.2 | 5.0 | 5.4 | 4.8 |
| Modulus 500% (MPa) | 8.8 | 5.7 | - | 6.9 | - | - | 8.7 | 6.6 | 9.9 | 7.0 | 7.5 | - |
| Elong. at break (%) | 570 | 470 | 450 | 680 | 480 | 460 | 530 | 570 | 610 | 620 | 680 | 400 |
| Tear strength (kN/m) | 47 | 33 | 25 | 43 | 39 | 33 | 37 | 37 | 60 | 44 | 46 | 29 |
| Tensile set (%) | 20 | 18 | 20 | 16 | 22 | 23 | 23 | 19 | 21 | 18 | 23 | 20 |
| Set at break (%) | 69 | 78 | 46 | 84 | 68 | 70 | 82 | 80 | 100 | 74 | 92 | 48 |
| PMD | | | | | | | | | | | | |
| Tensile strength (MPa) | 11.9 | 5.5 | 3.3 | 9.1 | 10.3 | 7.9 | 11.7 | 12.9 | 11.3 | 8.0 | 8.5 | 3.9 |
| Modulus 100% (MPa) | 3.2 | 2.6 | 2.0 | 2.4 | 2.9 | 2.5 | 2.6 | 2.3 | 3.7 | 2.7 | 2.6 | 2.0 |
| Modulus 300% (MPa) | 4.8 | 3.7 | 2.8 | 4.0 | 4.8 | 4.0 | 4.2 | 3.5 | 5.4 | 3.9 | 4.1 | 3.7 |
| Modulus 500% (MPa) | 8.1 | 5.1 | 3.7 | 6.3 | 8.9 | 6.9 | 8.1 | 5.8 | 9.0 | 6.2 | 6.5 | - |
| Elong. at break (%) | 620 | 550 | 500 | 680 | 550 | 560 | 600 | 730 | 610 | 630 | 620 | 390 |
| Tear strength (kN/m) | 49 | 33 | 24 | 40 | 39 | 34 | 39 | 39 | 60 | 44 | 43 | 25 |
| Tensile set (%) | 16 | 18 | 17 | 10 | 22 | 22 | 17 | 17 | 17 | 13 | 12 | 9 |
| Set at break (%) | 48 | 94 | 52 | 58 | 98 | 94 | 118 | 128 | 96 | 60 | 108 | 14 |

EP 0 541 174 A1

EP 0 541 174 A1

TABLE C    Physical properties after hot air ageing at 120 °C

| Formulation | (1) | | | (6) | | | (7) | | | (9) | | |
|---|---|---|---|---|---|---|---|---|---|---|---|---|
| Ageing time (weeks) | 4 | 8 | 12 | 4 | 8 | 12 | 4 | 8 | 12 | 4 | 8 | 12 |
| Hardness Shore A | | | | | | | | | | | | |
| 0 (s) | 81.5 | 79 | 82 | 78 | 76 | 78 | 80 | 79 | 82 | 70 | 72 | 73 |
| 30 (s) | 74 | 75 | 78 | 71 | 72 | 75 | 74 | 75 | 79 | 67 | 69 | 70 |
| MD | | | | | | | | | | | | |
| Tensile strength (MPa) | 9.7 | 10 | 10 | 7.4 | 7.5 | 8.2 | 10.1 | 10.8 | 10.4 | 7.0 | 7.3 | 6.9 |
| Modulus 100% (MPa) | 4.0 | 4.1 | 4.3 | 3.4 | 3.6 | 3.6 | 7.3 | 5.8 | 5.6 | 4.1 | 4.4 | 4.3 |
| Modulus 300% (MPa) | 5.2 | 5.3 | 5.5 | 5.3 | 5.4 | 5.4 | 5.7 | 7.4 | 7.3 | 5.2 | 5.6 | 5.4 |
| Elong. at break (%) | 560 | 570 | 560 | 510 | 450 | 470 | 590 | 580 | 610 | 580 | 580 | 600 |
| Tear strength (kN/m) | 44 | 44 | 46 | 39 | 38 | 38 | 57 | 59 | 57 | 43 | 45 | 44 |
| Tensile set (%) | 19 | 20 | 20 | 16 | 18 | 18 | 27 | 26 | 24 | 22 | 22 | 20 |
| Set at break (%) | 66 | 72 | 64 | 54 | 44 | 40 | 74 | 90 | 80 | 58 | 64 | 52 |
| PMD | | | | | | | | | | | | |
| Tensile strength (MPa) | 10.4 | 10.1 | 10.5 | 11.8 | 11.4 | 12.4 | 10.1 | 9.7 | 10.2 | 6.9 | 7.2 | 7.8 |
| Modulus 100% (MPa) | 3.2 | 3.2 | 3.2 | 2.8 | 2.8 | 2.8 | 3.6 | 3.6 | 3.5 | 2.6 | 2.5 | 2.7 |
| Modulus 300% (MPa) | 4.4 | 4.5 | 4.5 | 4.7 | 4.7 | 4.6 | 5.2 | 5.2 | 5.1 | 3.7 | 3.8 | 3.8 |
| Elong. at break (%) | 620 | 600 | 600 | 590 | 570 | 600 | 560 | 560 | 580 | 580 | 570 | 590 |
| Tear strength (kN/m) | 46 | 46 | 49 | 38 | 39 | 39 | 56 | 56 | 54 | 40 | 42 | 40 |
| Tensile set (%) | 18 | 22 | 18 | 16 | 20 | 17 | 22 | 20 | 18 | 12 | 14 | 16 |
| Set at break (%) | 88 | 80 | 80 | 84 | 72 | 90 | 74 | 66 | 70 | 52 | 44 | 48 |

TABLE D    Physical properties of Comparative Formulations after hot air ageing at 120 °C

| Formulation | (A) | | | (B) | | |
|---|---|---|---|---|---|---|
| Ageing time (weeks) | 4 | 8 | 12 | 4 | 8 | 12 |
| **Hardness Shore A** | | | | | | |
| 0 (s) | 71 | 72 | 74 | 76 | 78 | 80 |
| 30 (s) | 67 | 69 | 72 | 73 | 75 | 77 |
| **MD** | | | | | | |
| Tensile strength (MPa) | 7.6 | 7.7 | 8.4 | 10.3 | 11.1 | 11.2 |
| Modulus 100% (MPa) | 4.3 | 4.3 | 4.7 | 3.4 | 3.5 | 3.5 |
| Modulus 300% (MPa) | 5.5 | 5.6 | 5.9 | 4.9 | 5.2 | 5.1 |
| Elong. at break (%) | 640 | 600 | 600 | 610 | 600 | 560 |
| Tear strength (kN/m) | 42 | 37 | 49 | 40 | 42 | 46 |
| Tensile set (%) | 12 | 18 | 18 | 16 | 14 | 19 |
| Set at break (%) | 58 | 70 | 68 | 32 | 108 | 51 |
| **PMD** | | | | | | |
| Tensile strength (MPa) | 8.3 | 8.5 | 8.9 | 13 | 15.5 | 15.9 |
| Modulus 100% (MPa) | 3.6 | 2.7 | 2.8 | 2.6 | 2.7 | 2.8 |
| Modulus 300% (MPa) | 5.2 | 4.0 | 4.3 | 4.1 | 4.2 | 4.4 |
| Elong. at break (%) | 630 | 620 | 610 | 680 | 690 | 690 |
| Tear strength (kN/m) | 46 | 45 | 44 | 40 | 44 | 44 |
| Tensile set (%) | 10 | 14 | 12 | 14 | 14 | 17 |
| Set at break (%) | 46 | 50 | 52 | 92 | 110 | 112 |

EXAMPLES 10 – 18

In the same way as described under Example 1, compositions were prepared starting from the components as specified in Table E. Apart from the plasticizer (Hyvis 200), the preblend contained all the specified compounding ingredients.

The physical properties of Formulations (10) – (18) are listed in Table F.

TABLE E  Filler-containing Formulations (10)-(18)

| Formulation | (10) | (11) | (12) | (13) | (14) | (15) | (16) | (17) | (18) |
|---|---|---|---|---|---|---|---|---|---|
| KRATON G-1650 | 100 | 100 | 100 | 100 | 100 | 100 | 100 | 100 | 100 |
| Hyvis 200 | 75 | 75 | 75 | 100 | 100 | 100 | 125 | 125 | 125 |
| Petrothene NA 386[1] | 40 | 60 | 80 | 40 | 60 | 80 | 40 | 60 | 80 |
| Durcal 5 (filler)[1] | 180 | 180 | 180 | 180 | 180 | 180 | 180 | 180 | 180 |
| Irganox 1010 | 0.4 | 0.4 | 0.4 | 0.4 | 0.4 | 0.4 | 0.4 | 0.4 | 0.4 |
| Tinuvin 327 | 1.25 | 1.25 | 1.25 | 1.25 | 1.25 | 1.25 | 1.25 | 1.25 | 1.25 |
| Epon 1004[1] | 2 | 2 | 2 | 2 | 2 | 2 | 2 | 2 | 2 |

1) Petrothene, Durcal and Epon are Trade Marks

TABLE F   Physical properties of Formulations (10)-(18)

| Formulation | (10) | (11) | (12) | (13) | (14) | (15) | (16) | (17) | (18) |
|---|---|---|---|---|---|---|---|---|---|
| Hardness Shore A | 56 | 61 | 64 | 50 | 56 | 60 | 42 | 49 | 55 |
| MFR "G" (g/10 min) | 2.3 | 1.8 | 1.7 | 7.1 | 6.0 | 3.9 | 13 | 9.1 | 8.8 |
| Compression Set (%) | | | | | | | | | |
| 22 h, 100 °C | 100 | 100 | 98 | 100 | 97 | 96 | 100 | 97 | 95 |
| 72 h, 70 °C | 79 | 78 | 75 | 79 | 76 | 73 | 70 | 69 | 69 |
| 168 h, 23 °C | 20 | 21 | 22 | 20 | 21 | 22 | 13 | 17 | 21 |
| **MD** | | | | | | | | | |
| Modulus 300% (MPa) | 4.3 | 4.9 | 5.4 | 3.7 | 4.2 | 4.8 | 2.5 | 3.3 | 4.0 |
| Tensile strength (MPa) | 6.0 | 7.1 | 7.6 | 4.2 | 5.1 | 5.4 | 2.5 | 3.4 | 4.3 |
| Elong. at break (%) | 530 | 540 | 530 | 450 | 460 | 460 | 350 | 370 | 400 |
| Tear strength (kN/m) | 36 | 42 | 46 | 29 | 33 | 39 | 20 | 26 | 33 |
| Set at break (%) | 72 | 88 | 112 | 56 | 72 | 92 | 36 | 52 | 72 |
| **PMD** | | | | | | | | | |
| Modulus 300% (MPa) | 3.8 | 4.3 | 4.7 | 3.4 | 3.7 | 4.1 | 2.6 | 3.1 | 3.5 |
| Tensile strength (MPa) | 9.0 | 11 | 11.3 | 6.7 | 7.8 | 8.8 | 3.5 | 5.0 | 6.9 |
| Elong. at break (%) | 660 | 670 | 670 | 650 | 660 | 690 | 600 | 620 | 670 |
| Tear strength (kN/m) | 41 | 47 | 51 | 34 | 39 | 43 | 24 | 31 | 37 |
| Set at break (%) | 92 | 136 | 180 | 88 | 128 | 168 | 76 | 112 | 164 |

EXAMPLES 19-27

In the same way as described under Example 1, compositions were prepared starting from the components as specified in Table G. Apart from the plasticizer (Hyvis 200), the preblend contained all the specified compounding ingredients.
The physical properties of Formulations (19)-(27) are listed in Table H.

EP 0 541 174 A1

TABLE G  Filler-containing Formulations (19)-(27)

| Formulation | (19) | (20) | (21) | (22) | (23) | (24) | (25) | (26) | (27) |
|---|---|---|---|---|---|---|---|---|---|
| KRATON RP-6904 | 100 | 100 | 100 | 100 | 100 | 100 | 100 | 100 | 100 |
| Hyvis 200 | 75 | 75 | 75 | 100 | 100 | 100 | 125 | 125 | 125 |
| Petrothene NA 386[1] | 40 | 60 | 80 | 40 | 60 | 80 | 40 | 60 | 80 |
| Durcal 5 (filler)[1] | 180 | 180 | 180 | 180 | 180 | 180 | 180 | 180 | 180 |
| Irganox 1010 | 0.4 | 0.4 | 0.4 | 0.4 | 0.4 | 0.4 | 0.4 | 0.4 | 0.4 |
| Tinuvin 327 | 1.25 | 1.25 | 1.25 | 1.25 | 1.25 | 1.25 | 1.25 | 1.25 | 1.25 |
| Epon 1004[1] | 2 | 2 | 2 | 2 | 2 | 2 | 2 | 2 | 2 |

1) Petrothene, Durcal and Epon are Trade Marks

14

TABLE H

Test results of RP-6904/PIB/LLDPE compounds

|  |  | 19 | 20 | 21 | 22 | 23 | 24 | 25 | 26 | 27 |
|---|---|---|---|---|---|---|---|---|---|---|
| RP-6904 MD | PHR | 100 | 100 | 100 | 100 | 100 | 100 | 100 | 100 | 100 |
| PIB | PHR | 75 | 75 | 75 | 100 | 100 | 100 | 125 | 125 | 125 |
| LLDPE | PHR | 40 | 60 | 80 | 40 | 60 | 80 | 40 | 60 | 80 |
| Mod. 100% | MPa | 2.5 | 3.3 | 4.0 | 2.4 | 2.9 | 3.3 | 1.8 | 2.3 | 2.8 |
| Mod. 300% | MPa | 4.0 | 5.3 | 6.1 | 3.4 | 4.0 | 4.7 | 2.7 | 3.3 | 4.0 |
| Tensile | MPa | 5.3 | 5.6 | 6.3 | 3.5 | 4.4 | 4.9 | 3.1 | 4.2 | 4.8 |
| Elong. at br. | % | 410 | 350 | 320 | 390 | 350 | 330 | 420 | 400 | 390 |
| Set at break | % | 60 | 72 | 84 | 52 | 68 | 76 | 44 | 66 | 68 |
| Tear Str. | kN/m | 28 | 34 | 40 | 22 | 28 | 34 | 19 | 23 | 29 |
|  |  |  |  |  |  |  |  |  |  |  |
| RP-6904 PMD | PHR | 100 | 100 | 100 | 100 | 100 | 100 | 100 | 100 | 100 |
| PIB | PHR | 75 | 75 | 75 | 100 | 100 | 100 | 125 | 125 | 125 |
| LLDPE | PHR | 40 | 60 | 80 | 40 | 60 | 80 | 40 | 60 | 80 |
| Mod. 100% | MPa | 2.3 | 2.7 | 3.1 | 2.0 | 2.3 | 2.7 | 1.6 | 2.0 | 2.4 |
| Mod. 300% | MPa | 3.3 | 3.7 | 4.2 | 2.7 | 3.2 | 3.6 | 2.3 | 2.8 | 3.2 |
| Tensile | MPa | 7.5 | 9.1 | 10.5 | 5.6 | 7.2 | 8.3 | 4.3 | 5.6 | 7.0 |
| Elong. at br. | % | 530 | 570 | 580 | 540 | 580 | 590 | 570 | 590 | 620 |
| Set at break | % | 108 | 156 | 196 | 100 | 144 | 184 | 96 | 140 | 176 |
| Tear Str. | kN/M | 31 | 36 | 41 | 25 | 30 | 35 | 20 | 24 | 30 |
|  |  |  |  |  |  |  |  |  |  |  |
| Hardn. Sh. A | - | 65 | 73 | 77 | 58 | 65 | 71 | 49 | 57 | 64 |
| MFR G | g/10 | <1 | <1 | <1 | 1.5 | 1.5 | 1.5 | 3.5 | 3.5 | 3.5 |
| Compression Set |  |  |  |  |  |  |  |  |  |  |
| 22 h 100 °C | % | 70 | 67 | 66 | 68 | 65 | 65 | 67 | 64 | 63 |
| 72 h 70 °C | % | 39 | 37 | 35 | 35 | 34 | 33 | 30 | 28 | 25 |
| 168 h 23 °C | % | 19 | 21 | 22 | 18 | 20 | 21 | 17 | 18 | 20 |

| DESCRIPTION OF MATERIALS USED | | |
|---|---|---|
| Trade name | Description | Supplier |
| KRATON G – 1650 | Medium MW(n) styrene – ethylene/butylene – styrene block copolymer | SHELL |
| KRATON G – 1651 | High MW(n) styrene – ethylene/butylene – styrene block copolymer | SHELL |
| KRATON G – 1652 | Low MW(n) styrene – ethylene/butylene – styrene block copolymer | SHELL |
| KRATON RP – 6904 | High MW(n) styrene – ethylene/butylene – styrene block copolymer | SHELL |
| Witco 260 | Paraffinic oil | Witco Chemicals |
| Napvis 30 | Polybutylene, $\overline{M}_n$ = 1250, $\overline{M}_w/\overline{M}_n$ = 1.9 | BP |
| Hyvis 200 | Polyisobutylene, $\overline{M}_n$ = 2540, $\overline{M}_w/\overline{M}_n$ = 2.0 | BP |
| Irganox 1010 | Antioxidant | Ciba Geigy |
| Kristalex F120 | Resin, largely derived from $\alpha$ – methylstyrene | Hercules |
| PP SM 6100 | Homopolymer polypropylene | SHELL |
| Tinuvin 327 | U.V. – stabilizer | Ciba Geigy |
| Petrothene NA386 | LLDPE; Linear Low Density PolyEthylene | USI Chemicals Europe |
| Irganox PS 800 | DLTDP: dilauryl ester of B,B' – thiodipropionic acid | Ciba Geigy |
| Durcal 5 | Filler material | Omya |
| Epon 1004 | Epoxy resin | SHELL |

**Claims**

1. A block copolymer composition comprising:

(a) a block copolymer containing at least one block, derived from predominantly vinyl aromatic compound and at least one selectively hydrogenated elastomeric block, derived from predominantly conjugated diene,

(b) thermoplastic polymers selected from polyalkylenes, poly(vinyl aromatic), polyphenylene ether and mixtures thereof in an amount of from 5 parts by weight to 500 parts by weight per 100 parts by weight of block copolymer,

(c) a plastifier consisting of a poly(alkylene) having a $\overline{M}_w/\overline{M}_n$ ratio in the range of from 1.0 to 3.0, and having a number average molecular weight in the range of from 1100 to 6000, in an amount of from 5 to 200 parts by weight per 100 parts by weight of block copolymer,

(d) fillers in an amount of from 0 to 500 parts by weight per 100 parts by weight of block copolymer, and

(e) additives such as flame retarders, antioxidantia, stabilizers, flow promoting resins, dyes and the like, each of the additives in an amount of from 0 to 50 parts by weight per 100 parts by weight of block copolymer.

2. A block copolymer composition according to claim 1, comprising component (b) in an amount of from 25 parts by weight to 250 parts by weight per 100 parts by weight of block copolymer.

3. A block copolymer composition according to claim 1, comprising component (c) having a $\overline{M}_w/\overline{M}_n$ ratio in the range of from 1.3 to 2.4.

4. A block copolymer composition according to claims 1 – 3, comprising component (c), having a number average molecular weight in the range of from 1200 to 4500.

5. A block copolymer composition according to claim 4, comprising component (c), having a number average molecular weight in the range of from 2000 to 3500.

**6.** A block copolymer composition according to claim 1, comprising component (c) in an amount of from 50 to 150 parts by weight per 100 parts by weight of block copolymer.

**7.** A block copolymer composition according to claim 1, comprising component (d) in an amount of from 50 to 250 parts by weight per 100 parts by weight of block copolymer.

**8.** A block copolymer composition according to claims 1 to 7, characterized in that the poly(alkylene) of component (c) is selected from the group consisting of polypropylene, polybutylene and polyisobutylene.

**9.** The block copolymer composition of claim 8, characterized in that component (c) is a polybutylene or a polyisobutylene.

**10.** A block copolymer composition according to claims 1 to 9, characterized in that the selectively hydrogenated block copolymer is derived from styrene and butadiene or isoprene or mixtures thereof.

**11.** The block copolymer composition of claim 10, characterized in that the selectively hydrogenated block copolymer is derived from styrene and butadiene.

**12.** Shaped articles prepared from a block copolymer composition according to claims 1 – 9.

# FIG.1

## % WEIGHT LOSS DURING HEAT AGEING
## AT 120°C

# FIG.2

## % SHRINKAGE DURING HEAT AGEING
## AT 120°C

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | GB-A-2 250 295 (ASAHI KASEI KOGYO KABUSHIKI KAISHA) <br> * page 12, line 20 - line 22 * <br> * claims 1-2,4-5 * <br> --- | 1-2,6-12 | C08L53/02 <br> C08L101/00 <br> C08K5/01 <br> //(C08L53/02, 101:00) <br> (C08L101/00, 53:02) |
| X | DE-A-4 040 396 (TAKATA CORP.) <br><br> * page 2, line 48 - page 3, line 1 * <br> * page 4, line 52 - line 60 * <br> * claims 1,4,9-10 * <br> --- | 1-2,4-6, 8-12 | |
| A | DE-A-2 802 966 (SHELL INTERNATIONALE RESEARCH MAATSCHAPPIJ B.V.) <br> * page 18, line 6 - line 14; claim 1 * <br><br> ----- | 1 | |

TECHNICAL FIELDS
SEARCHED (Int. Cl.5)

C08L
C08K

The present search report has been drawn up for all claims

| Place of search | Date of completion of the search | Examiner |
|---|---|---|
| THE HAGUE | 04 FEBRUARY 1993 | SIEMENS T. |

EPO FORM 1503 03.82 (P0401)